# EUROPÄISCHE PATENTSCHRIFT

(11) **EP 1 190 892 B1**
(45) Veröffentlichungstag und Bekanntmachung des Hinweises auf die Patenterteilung: **14.04.2004**
(21) Anmeldenummer: 01119182.2
(22) Anmeldetag: 09.08.2001
(51) Int. Cl.: B60N 2/24, B60N 2/68

(54) **Sitz für ein Kraftfahrzeug**
Motor vehicle seat
Siège pour un véhicule automobile

(30) Priorität: 20.09.2000 DE 20016389 U
(43) Veröffentlichungstag der Anmeldung: 27.03.2002
(73) Patentinhaber: Franz Kiel GmbH & Co. KG, 86720 Nördlingen (DE)
(72) Erfinder: Mill, Juergen, 73479 Ellwangen (DE)
(74) Vertreter: Lorenz, Werner, Dr.-Ing.

(56) Entgegenhaltungen:
- GB-A- 2 315 408
- US-A- 3 744 843
- US-A- 3 877 749
- US-A- 4 252 341
- US-A- 5 836 547

## Beschreibung

Die Erfindung betrifft einen Sitz für ein Kraftfahrzeug, insbesondere einen Fahrgastsitz für Omnibusse, Kleintransporter und dergleichen, nach der im Oberbegriff von Anspruch 1 näher definierten Art.

Gattungsgemäße Sitze sind aus dem allgemeinen Stand der Technik bekannte (z.B. US 5 836 547 A).

Nachdem moderne Pkw bereits seit längerem mit Fahrerund Beifahrerairbags ausgerüstet werden und in jüngster Zeit auch Seiten- und Kopfairbags hinzugekommen sind, sind auch im Bereich von Omnibussen oder Kleintransportern Tendenzen in Richtung eines besseren Insassenschutzes erkennbar. Da die aktive Fahrsicherheit dieser Kraftfahrzeuge bereits ein sehr hohes Niveau erreicht hat, ist eine Verbesserung der Insassensicherheit meist nur durch passive Systeme erreichbar. Bei Omnibussen bzw. Kleintransportern würde der Einbau von Airbags in jeden einzelnen Fahrgastsitz, um den dahinter sitzenden Passagier zu schützen, jedoch zu sehr hohen und in den meisten Fällen nicht tragbaren Kosten führen.

Aus diesem Grund waren Bemühungen dahingehend zu beobachten, die bestehenden Sitze derart umzugestalten, daß für den dahinter sitzenden Passagier bei einem Unfall und einem damit verbundenen eventuellen Kopfaufschlag eine möglichst geringe Verletzungsgefahr, angegeben durch den sogenannten HIC-Wert, entsteht. Um dies zu realisieren, ist eine Rückenlehne erforderlich, die die auf sie einwirkende Kraft möglichst gut absorbiert. Dies steht jedoch im Widerspruch zu der für die sichere Anbringung eines Dreipunkt-Automatikgurtes an diesem Sitz erforderliche Steifigkeit der Rückenlehne.

Es ist daher Aufgabe der Erfindung, einen Sitz zum Einbau in Kraftfahrzeuge, insbesondere einen Fahrgastsitz für Omnibusse, Kleintransporter und dergleichen, zu schaffen, der einerseits ausreichend steif ist, um einen Dreipunkt-Automatikgurt aufnehmen zu können und der andererseits bezüglich der Kopfaufschlagwerte für einen dahinter sitzenden Passagier eine möglichst geringe Gefahr darstellt.

Erfindungsgemäß wird diese Aufgabe dadurch gelöst, daß an der Rückseite des Kopfteiles ein Prallelement angeordnet ist, welches mit den zwei Seitenholmen verbunden ist, und daß die beiden Seitenholme im oberen Bereich der Rückenlehne unterhalb des Prallelementes durch ein Verbindungsglied miteinander verbunden sind.

Das erfindungsgemäß an der Rückseite des Kopfteiles der Rückenlehne angeordnete Prallelement stellt für den hinter dem erfindungsgemäßen Sitz sich befindlichen Passagier sicher, daß bei einem eventuellen Unfall des Fahrzeugs, in dem der Sitz eingebaut ist, ein Kopfaufprall auf diesen Sitz keine schwerwiegenderen Verletzungen nach sich zieht. Das erfindungsgemäße Prallelement ist nämlich in der Lage, die von dem Kopf einwirkende Kraft zu absorbieren und bietet somit, ähnlich wie die Motorhaube bei Personenkraftwagen, eine Knautschzone. Dabei stellt das Prallelement ein verhältnismäßig günstiges Bauteil dar, welches die Herstellungskosten für den gesamten Sitz nur unwesentlich erhöht.

Durch das erfindungsgemäße Verbindungsglied, welches die beiden Seitenholme unterhalb des Prallelementes miteinander verbindet, erhält der erfindungsgemäße Sitz in demjenigen Bereich, in dem sich normalerweise der obere Aufhängungspunkt für einen eventuellen Dreipunkt-Automatikgurt befindet, die erforderliche Steifigkeit, um auch im Falle eines Unfalls sicherzustellen, daß der Sitz bzw. die Rücklehne des Sitzes nicht verformt oder gar der Aufhängepunkt herausgerissen wird. Selbstverständlich kann der erfindungsgemäße Sitz jedoch auch ohne diesen Dreipunkt-Automatikgurt ausgeführt werden.

Der erfindungsgemäße Sitz ist also zum einen ausreichend steif, um die Anbringung eines Gurtes zu ermöglichen, er stellt jedoch zum anderen für einen dahinter sitzenden Passagier nur eine sehr geringe Gefahr dar.

Wenn in einer vorteilhaften Ausgestaltung der Erfindung das Prallelement aus Metallblech besteht, so ist sichergestellt, daß das Prallelement nicht splittert, sondern die von dem Kopf ausgehende Energie sehr gut aufnimmt und so schwerwiegenden Verletzungen vorbeugt. Je nach Art des Sitzes läßt sich durch Verwendung einer bestimmten Blechqualität und einer bestimmten Blechstärke dabei eine Anpassung des Prallelementes an die jeweiligen Gegebenheiten erreichen.

Weitere vorteilhafte Ausgestaltungen und Weiterbildungen der Erfindung ergeben sich aus den Unteransprüchen sowie aus dem nachfolgend anhand der Zeichnung prinzipmäßig dargestellten Ausführungsbeispiel.

Es zeigt:
- Fig. 1: eine Ansicht des erfindungsgemäßen Sitzes mit dem Prallelement von hinten;
- Fig. 2: eine Ansicht des erfindungsgemäßen Sitzes aus Fig. 1 von vorne; und
- Fig. 3: eine Seitenansicht des Sitzes aus Fig. 1 und Fig. 2.

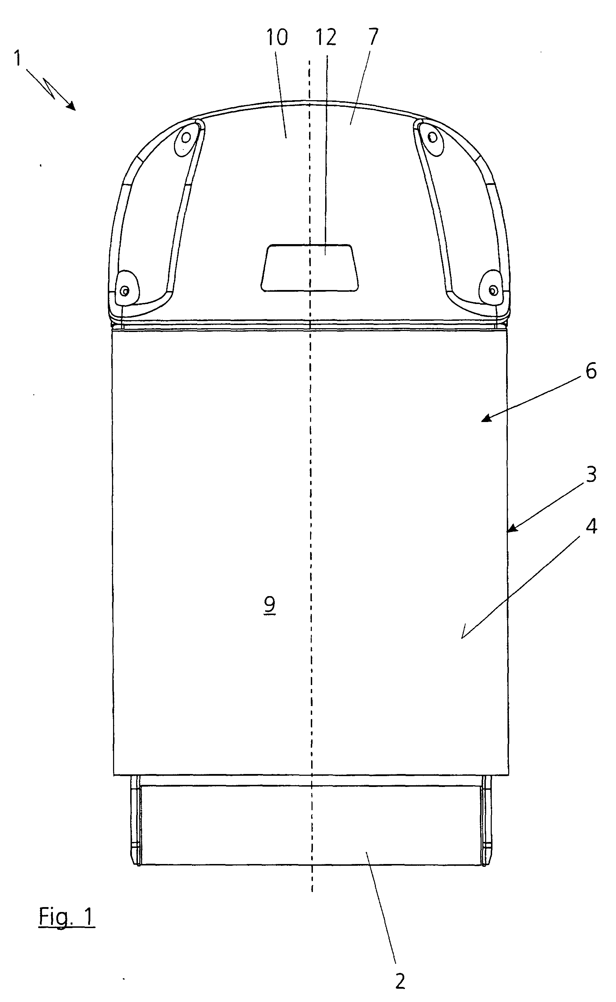

Fig. 1 zeigt einen Sitz 1 für ein nicht dargestelltes Kraftfahrzeug, insbesondere für einen Omnibus, einen Kleintransporter und dergleichen. Der Sitz 1 ist als Fahrgastsitz 1 ausgebildet, d.h. für einen Benutzer vorgesehen, der in dem Kraftfahrzeug lediglich als Passagier mitfährt.

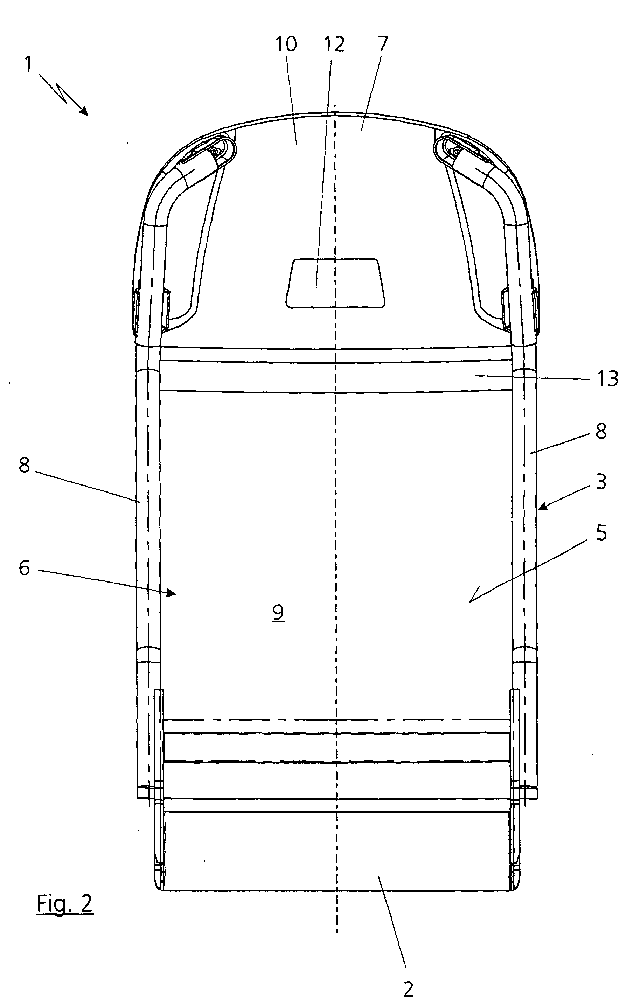

Der Fahrgastsitz 1 weist eine nur schematisch dargestellte Sitzfläche 2 und eine in bekannter Weise an der Sitzfläche 2 angeordnete Rückenlehne 3 auf. Von der Rückenlehne 3 ist in Fig. 1 lediglich eine dem Benutzer des Fahrgastsitzes 1 abgewandte Rückseite 4 erkennbar, wohingegen Fig. 2 eine Ansicht einer der Rückseite 4 gegenüberliegenden Vorderseite 5 der Rükkenlehne 3 zeigt, die also dem Benutzer bzw. Fahrgast zugewandt ist. Unterhalb der Sitzfläche 2 befindet sich in nicht dargestellter Weise ein Fuß, der gegebenenfalls aus hochfestem Stahl in Form sehr dünner Bleche ausgebildet sein kann und fest mit dem Kraftfahrzeug verbunden ist.

Des weiteren ist die Rückenlehne 3 in an sich bekannter Weise in ein der Sitzfläche 2 zugewandtes Rückenteil 6 und in ein sich auf der der Sitzfläche 2 gegenüberliegenden Seite des Rückenteils 6 befindliches Kopfteil 7 aufgeteilt. Das Rückenteil 6 dient zur Anlage des Rückens des Benutzers, wohingegen das Kopfteil 7 dafür vorgesehen ist, dem Kopf des Benutzers eine Abstützung zu geben.

Das Rückenteil 6 weist zu seiner Stabilisierung zwei an seinen beiden Seiten verlaufende, im vorliegenden Fall als Metallrohre ausgeführte Seitenholme 8 auf, zwischen denen sich ein in der dargestellten Ausführungsform aus Holz bestehendes Lehnenelement 9 befindet. Selbstverständlich wird der Fahrgastsitz 1 nicht in den in den Figuren 1 bis 3 gezeigten Form in das Kraftfahrzeug eingebaut, sondern er wird zusätzlich mit nicht dargestellten Verkleidungen und gegebenenfalls mit Polsterungen versehen, so daß die dargestellten Elemente im eingebauten Zustand des Fahrgastsitzes 1 nicht zu sehen sind.

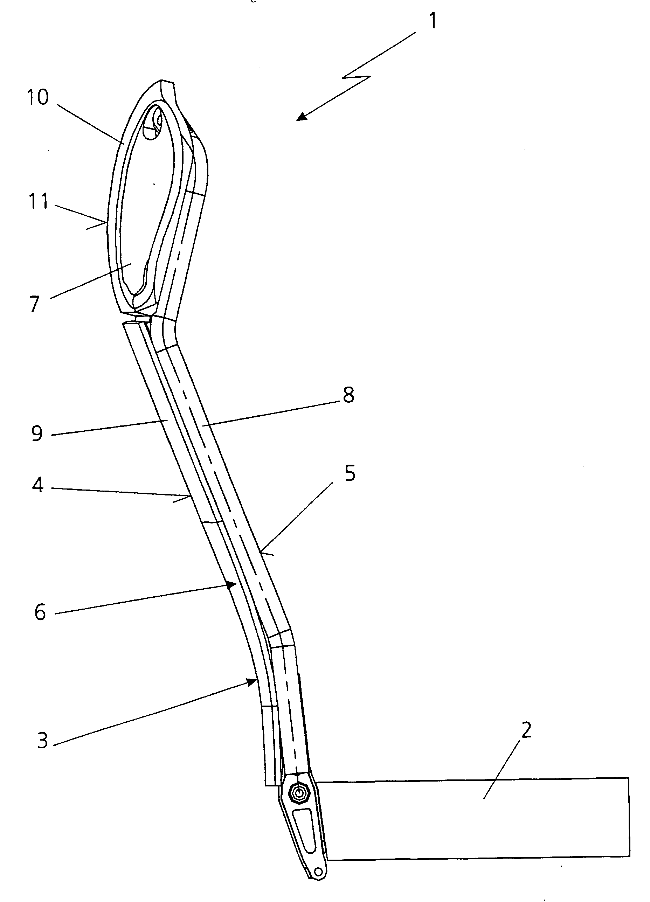

Um bei Unfällen des Kraftfahrzeuges für einen hinter dem Fahrgastsitz 1 auf einem eventuellen weiteren Fahrgastsitz 1 sich befindlichen Passagier eine möglichst geringe Gefahr bezüglich Kopf- und eventueller Brustverletzungen darzustellen, ist an dem Kopfteil 7, und zwar an der Rückseite 4 desselben, ein Prallelement 10 angeordnet, welches mit den beiden Seitenholmen 8 verbunden ist. In der Seitenansicht gemäß Fig. 3 ist erkennbar, daß das Prallelement 10 eine von der Vorderseite 5 weg gerichtete Wölbung 11 aufweist, die in dem dargestellten Ausführungsbeispiel über die gesamte Breite und einen Teil der Höhe des Prallelementes 10 verläuft. Selbstverständlich könnte die Wölbung 11 auch nur über einen Teil der Breite des Prallelementes 10 verlaufen.

Das Prallelement 10 besteht aus einem gewölbten Metallblech, vorzugsweise aus Stahlblech oder gegebenenfalls aus Aluminiumblech. Diese genannten Materialien können die durch einen Kopfaufprall hervorgerufene Energie sehr gut aufnehmen, da sie sich durch die auf sie einwirkende Kraft plastisch verformen. Insbesondere die Tatsache, daß Metallblech über den gesamten Verformungsweg seine gestreckte Länge beibehält, stellt diesen Energieabbau sicher. Dabei kann durch die Auswahl der Qualität und der Dicke des entsprechenden Bleches sehr gut auf die jeweiligen Erfordernisse eingegangen werden, wobei hier hochfeste und dennoch tiefziehbare Blechqualitäten besonders vorteilhaft sind. Durch Tiefziehen kann die gewölbte Form des Prallelementes 10 besonders einfach und kostengünstig hergestellt werden.

Somit ist der gesamte Fahrgastsitz 1 sehr steif ausgeführt und wird bei einem Aufprall durch eine hinter dem Fahrgastsitz 1 sich befindliche Person nur unwesentlich verformt. Ein Großteil der Energie wird vielmehr durch das Prallelement 10 aufgenommen.

Wie in Fig. 1 zu erkennen, ist das Prallelement 10 mit einer im wesentlichen rechteckigen Aussparung 12 versehen, die erforderlich bzw. zweckmäßig ist, wenn in eine nicht dargestellte Kunststoffabdeckung für das Prallelement 10 ein ebenfalls nicht dargestellter Aschenbecher eingebaut werden soll. Wenn kein, Aschenbecher vorgesehen ist, kann die Aussparung 12 auch mit einem ebenfalls nicht dargestellten Füllstück verschlossen bzw. ausgefüllt werden. Des weiteren können sich unterhalb der oben erwähnten Kunststoffabdeckung Schaumelemente (nicht dargestellt) befinden, die zu einer noch besseren Dämpfung bei einem eventuellen Aufprall und somit zu einer weiter verbesserten Insassensicherheit führen.

Im vorliegenden Fall ist jedoch lediglich der Aschenbecher mittels der Kunststoffabdeckung abgedeckt, das Prallelement 10 ist lediglich mit einer nicht dargestellten Polsterung versehen. In ebenfalls nicht dargestellter Weise können an dem Prallelement 10 einer oder mehrere Haltegriffe angebracht sein.

Zur Versteifung der Rückenlehne 3 sind die beiden Seitenholme 8 im oberen Bereich der Rückenlehne unterhalb des Prallelementes 10 durch ein Verbindungsglied 13 miteinander verbunden. Hierdurch erhöht sich die Steifigkeit der Rückenlehne 3 des Fahrgastsitzes 1 derart, daß in demjenigen Bereich, in dem das Verbindungsglied 13 an einem der beiden Seitenholme 8 angebracht ist, eine nicht dargestellte Umlenkung bzw. ein Aufhängepunkt für einen ebenfalls nicht dargestellten, jedoch prinzipiell bekannten Dreipunkt-Automatikgurt angeordnet werden kann. Das Verbindungsglied 13 ist hierbei als Metallstab ausgeführt, der über die gesamte Breite der Rückenlehne 3 in demjenigen Bereich des Rückenteils 6 verläuft, der unmittelbar an das Kopfteil 7 und somit an das Prallelement 10 angrenzt. Selbstverständlich wäre es auch möglich, das Verbindungsglied 13 in einer anderen Form oder aus einem anderen Material herzustellen. Das Prallelement 10 ist, wie bereits erwähnt, an den beiden Seitenholmen 8 angebracht, was z.B. durch Verschweißen erreicht werden kann. Die beiden Seitenholme 8 verlaufen dabei noch über das Verbindungsglied 13 hinaus nach oben, sind dort jedoch nicht miteinander verbunden, so daß das Prallelement 10 die gesamte, durch einen eventuellen Aufprall auftretende Energie aufnehmen kann.

## Patentansprüche

1. Sitz (1) zum Einbau in Kraftfahrzeuge, insbesondere Fahrgastsitz für Omnibusse, Kleintransporter und dergleichen, mit folgenden Merkmalen:
1.1 einer Sitzfläche (2) und einer an der Sitzfläche angeordneten Rückenlehne (3),
1.2 die Rückenlehne (3) weist eine dem Benutzer zugewandte Vorderseite (5) und eine dem Benutzer abgewandte Rückseite (4) auf,
1.3 die Rückenlehne (3) weist ein Rückenteil (6) und ein Kopfteil (7) auf,
1.4 das Rückenteil (6) weist zwei Seitenholme (8) und ein zwischen den Seitenholmen (8) verlaufendes Lehnenelement (9) auf,
1.5 an der Rückseite (4) des Kopfteiles (7) ist ein Prallelement (10) angeordnet, welches mit den zwei Seitenholmen (8) verbunden ist,
**dadurch gekennzeichnet, daß**
1.6 die beiden Seitenholme (8) im oberen Bereich der Rückenlehne unterhalb des Prallelementes (10) durch ein Verbindungsglied (13) miteinander verbunden sind.

2. Sitz nach Anspruch 1,
**dadurch gekennzeichnet, daß**
das Prallelement (10) eine von der Vorderseite (5) weg gerichtete Wölbung (11) aufweist, welche über wenigstens annähernd die gesamte Breite und/oder zumindest einen Teil der Höhe des Prallelementes (10) verläuft.

3. Sitz nach Anspruch 2,
**dadurch gekennzeichnet, daß**
das Prallelement (10) aus Metallblech besteht.

4. Sitz nach Anspruch 3,
**dadurch gekennzeichnet, daß**
das Prallelement (10) aus Stahlblech besteht.

5. Sitz nach Anspruch 3,
**dadurch gekennzeichnet, daß**
das Prallelement (10) aus Aluminiumblech besteht.

6. Sitz nach Anspruch 4 oder 5,
**dadurch gekennzeichnet, daß**
das Stahl- bzw. Aluminiumblech hochfest und/oder tiefziehbar ist.

7. Sitz nach einem der Ansprüche 1 bis 6,
**dadurch gekennzeichnet, daß**
das Prallelement (10) mit einer Aussparung (12) zur Unterbringung eines Aschenbechers versehen ist.

8. Sitz nach einem der Ansprüche 1 bis 7,
**dadurch gekennzeichnet, daß**
das Prallelement (10) mit einer Abdeckung aus Kunststoff versehen ist.

9. Sitz nach Anspruch 8,
**dadurch gekennzeichnet, daß** sich unterhalb der Kunststoffabdeckung Schaumelemente zur Dämpfung befinden.

10. Sitz nach einem der Ansprüche 1 bis 9,
**dadurch gekennzeichnet, daß**
die Seitenholme (8) durch Metallrohre gebildet sind.

11. Sitz nach einem der Ansprüche 1 bis 10,
**dadurch gekennzeichnet, daß**
das Verbindungsglied (13) durch einen Metallstab gebildet ist.

## Claims

1. Seat (1) for installation in motor vehicles, in particular, passenger seat for omnibuses, small transporters and the like, having the following features:
1.1 a seating part (2) and a backrest (3) disposed on the seating part,
1.2 the backrest (3) has a front side (5) which faces towards the user and a rear side (4) which faces away from the user,
1.3 the backrest (3) has a back portion (6) and a head portion (7),
1.4 the back portion (6) has two lateral members (8) and a support element (9) extending between the lateral members (8),
1.5 disposed on the rear side (4) of the head portion (7) is an impact element (10) which is coupled to the two lateral members (8),
**characterized in that**
1.6 the two lateral members (8) are coupled to one another in the upper region of the backrest, below the impact element (10), by a coupling link (13).

2. Seat according to Claim 1,
**characterized in that** the impact element (10) has a convexity (11), directed away from the front side (5), which extends over at least approximately the entire width and/or at least a portion of the height of the impact element (10).

3. Seat according to Claim 2,
**characterized in that** the impact element (10) is composed of sheet metal.

4. Seat according to Claim 3,
**characterized in that** the impact element (10) is composed of sheet steel.

5. Seat according to Claim 3,
**characterized in that** the impact element (10) is composed of sheet aluminium.

6. Seat according to either Claim 4 or 5,
**characterized in that** the sheet steel or sheet aluminium is high-strength and/or deep-drawable.

7. Seat according to any one of Claims 1 to 6,
**characterized in that** the impact element (10) is provided with a recess (12) for the purpose of accommodating an ashtray.

8. Seat according to any one of Claims 1 to 7,
**characterized in that** the impact element (10) is provided with a covering made from plastic.

9. Seat according to Claim 8,
**characterized in that** beneath the plastic covering there are foam elements for the purpose of damping.

10. Seat according to any one of Claims 1 to 9,
**characterized in that** the lateral members (8) consist of metal tubes.

11. Seat according to any one of Claims 1 to 10,
**characterized in that** the coupling link (13) consists of a metal bar.

## Revendications

1. Siège (1) destiné à être installé dans des véhicules automobiles, en particulier siège de passager pour autobus, petits véhicules de transport et équivalents, présentant les caractéristiques suivantes :
1.1. une surface d'assise (2) et un dossier (3) attaché à la surface d'assise,
1.2. le dossier (3) comporte une face avant (5) dirigée vers l'usager et une face arrière (4) qui est éloignée de l'usager,
1.3.le dossier (3) comporte une partie dorsale (6) et une partie de tête (7),
1.4.la partie dorsale (6) comporte deux montants latéraux (8) et un élément de dossier (9) qui s'étend entre les montants latéraux (8),
1.5. un élément de choc (10), qui est relié aux deux montants latéraux (8), est disposé sur le côté postérieur (4) de la partie de tête (7),
**caractérisé en ce que**
1.6.les deux montants latéraux (8) sont reliés l'un à l'autre par un élément de liaison (13) dans la région supérieure du dossier, en dessous de l'élément de choc (10).

2. Siège selon la revendication 1,
**caractérisé en ce que**
l'élément de choc (10) comporte un bombement (11) dirigé dans le sens qui s'éloigne du côté avant (5), qui s'étend sur au moins approximativement toute la largeur et/ou au moins sur une partie de la hauteur de l'élément de choc (10).

3. Siège selon la revendication 2,
**caractérisé en ce que**
l'élément de choc (10) est réalisé en tôle métallique.

4. Siège selon la revendication 3,
**caractérisé en ce que**
l'élément de choc (10) est réalisé en tôle d'acier.

5. Siège selon la revendication 3,
**caractérisé en ce que**
l'élément de choc (10) est réalisé en tôle d'aluminium.

6. Siège selon la revendication 4 ou 5,
**caractérisé en ce que**
la tôle d'acier ou d'aluminium est à haute résistance et/ou peut être emboutie.

7. Siège selon l'une des revendications 1 à 6,
**caractérisé en ce que**
l'élément de choc (10) est pourvu d'un évidement (12) destiné à loger un cendrier.

8. Siège selon l'une des revendications 1 à 7,
**caractérisé en ce que**
l'élément de choc (10) est pourvu d'un recouvrement en matière plastique.

9. Siège selon la revendication 8,
**caractérisé en ce que**,
en dessous du recouvrement en matière plastique, se trouvent des éléments en mousse servant pour l'amortissement.

10. Siège selon l'une des revendications 1 à 9,
**caractérisé en ce que**
les montants latéraux (8) sont formés par des tubes métalliques.

11. Siège selon l'une des revendications 1 à 10,
**caractérisé en ce que**
l'élément de liaison (13) est formé d'une barre métallique.
